# FASCICULE DE BREVET EUROPEEN

(11) **EP 3 293 412 B1**
(45) Date de publication et mention de la délivrance du brevet: **25.12.2019**
(21) Numéro de dépôt: 17182072.3
(22) Date de dépôt: 19.07.2017
(51) Int. Cl.: F16F 15/12

(54) **FIXATION D'UN ELEMENT DE TRANSMISSION DE COUPLE DANS UN DISPOSITIF D'AMORTISSEMENT**
BEFESTIGUNG EINES DREHMOMENTÜBERTRAGUNGSELEMENTS IN EINER DÄMPFUNGSVORRICHTUNG
ATTACHMENT OF A TORQUE-TRANSMISSION ELEMENT IN A DAMPING DEVICE

(30) Priorité: 12.08.2016 FR 1657742
(43) Date de publication de la demande: 14.03.2018
(73) Titulaire: Valeo Embrayages, 80009 Amiens Cedex 2 (FR)
(72) Inventeur: DHALLEINE, Christophe, 80009 AMIENS (FR); FENIOUX, Daniel, 80009 AMIENS (FR); DESQUESNES, Laurent, 80009 AMIENS (FR); LEBEAU, Fabien, 80009 AMIENS CEDEX 02 (FR)
(74) Mandataire: Cardon, Nicolas

(56) Documents cités:
- DE-A1-102010 047 803
- DE-A1-102012 218 877
- FR-A1- 2 339 107
- FR-A1- 2 393 199
- US-A1- 2008 171 604

## Description

### Domaine technique

L'invention se rapporte au domaine des transmissions pour véhicule automobile et concerne plus particulièrement un dispositif d'amortissement pour une chaîne de transmission de véhicule automobile.

### Arrière-plan technologique

Les moteurs à explosions ne génèrent pas un couple constant et présentent des acyclismes provoquées par les explosions se succédant dans leurs cylindres. Ces acyclismes génèrent des vibrations qui sont susceptibles de se transmettre à la boîte de vitesses et d'engendrer ainsi des chocs, bruits et nuisances sonores, particulièrement indésirables. Afin de diminuer les effets indésirables des vibrations et améliorer le confort de conduite des véhicules automobiles, il est connu d'équiper les transmissions de véhicule automobile avec des dispositifs d'amortissement. De tels dispositifs d'amortissement équipent notamment les doubles volants amortisseurs (DVA), les frictions d'embrayage, ou les embrayages de verrouillage, également appelés embrayages « lock-up ».

Le document FR3026802 divulgue un double volant amortisseur comportant un volant d'inertie primaire et un volant d'inertie secondaire mobiles en rotation l'un par rapport à l'autre autour d'un axe de rotation X. Le double volant amortisseur comporte des moyens élastiques d'amortissement qui sont formés de plusieurs lames flexibles montées sur l'un des volants d'inertie et coopérant chacune avec un galet associé monté mobile en rotation sur l'autre volant. La flexion des lames flexibles permet d'amortir les vibrations et irrégularités de rotation entre les volants d'inertie primaire et secondaire tout en assurant la transmission du couple.

Les lames flexibles sont liées à une portion de fixation rivetée sur le volant d'inertie et portent une surface de came coopérant avec le galet. Dans certaines conditions de fonctionnement du double volant amortisseur, notamment lors de sollicitations extrêmes en centrifugation, le rivet de fixation situé sur la portion de fixation au plus proche de la lame flexible supporte des efforts importants. Ce rivet peut se déformer et un jeu peut apparaitre, ce qui est susceptible de détériorer la fixation des lames flexibles.

### Résumé

L'invention vise à remédier à ces problèmes en proposant un dispositif d'amortissement pour une chaîne de transmission de véhicule qui soit particulièrement fiable et robuste.

Selon un mode de réalisation, l'invention fournit un dispositif d'amortissement pour une chaîne de transmission de véhicule automobile comportant :
- un premier élément et un deuxième élément mobiles en rotation l'un par rapport à l'autre autour d'un axe de rotation X ;
- au moins un élément de transmission de couple fixé au deuxième élément ; et
- au moins un élément élastique d'amortissement apte à accoupler le premier élément à l'élément de transmission de couple de manière à permettre une transmission de couple avec amortissement des vibrations entre le premier élément et le deuxième élément ;
- l'élément de transmission de couple étant fixé au deuxième élément par l'intermédiaire d'au moins un premier et un deuxième organes de fixation qui sont chacun montés dans un orifice respectif ménagé dans l'élément de transmission de couple ; le premier organe de fixation et le deuxième organe de fixation étant positionnés de telle sorte que le premier organe de fixation reprenne des efforts supérieurs à ceux repris par le deuxième organe de fixation lors d'une transmission de couple du premier élément vers le deuxième élément ; le premier organe de fixation étant monté par un ajustement serré, c'est-à-dire sans jeu, dans l'orifice respectif de l'élément de transmission de couple et présentant une dureté Rockwell supérieure à 30 HRC.

Ainsi, en prévoyant que l'organe de fixation qui est susceptible de reprendre les efforts les plus importants présente une dureté importante, celui-ci ne se déforme pas ce qui permet de garantir une fiabilité de la fixation au cours du temps. Cette solution est particulièrement avantageuse lorsque les organes de fixation de l'élément de transmission de couple ne peuvent être répartis circonférentiellement autour de l'axe de rotation, par exemple de façon annulaire.

Selon d'autres modes de réalisation avantageux, un tel dispositif d'amortissement peut présenter une ou plusieurs des caractéristiques suivantes.

Selon un mode de réalisation, le premier organe de fixation et le deuxième organe de fixation sont positionnés de telle sorte que le premier organe de fixation reprenne des efforts supérieurs à ceux repris par le deuxième organe de fixation lors d'une transmission de couple du premier élément vers le deuxième élément.

Selon un mode de réalisation, le premier et le deuxième organes de fixation traversent chacun un orifice respectif ménagé dans le deuxième élément.

Selon un mode de réalisation, l'élément de transmission de couple est fixé au deuxième élément par l'intermédiaire d'un troisième organe de fixation monté dans un orifice respectif de l'élément de transmission de couple.

Selon un mode de réalisation, les premier, deuxième et troisième organes de fixation sont disposés circonférentiellement les uns par rapport aux autres autour de l'axe de rotation.

Selon un mode de réalisation, le premier organe de fixation est monté par un ajustement serré dans l'orifice respectif du deuxième élément.

Selon un mode de réalisation, le premier organe de fixation est un rivet épanoui comportant une tige pleine présentant une première extrémité équipée d'une tête de rivet.

Selon un mode de réalisation, la tige pleine du rivet épanoui présente une seconde extrémité bouterollée qui est percée suivant l'axe de la tige pleine. Un organe de fixation présentant une telle structure peut être plus facilement riveté lorsqu'il présente une dureté importante. Un tel rivet épanoui présente typiquement une dureté comprise entre 36 et 50 HRC, par exemple de l'ordre de 45 HRC.

Selon un mode de réalisation, la tête de rivet est reçue dans un lamage formé à l'extrémité de l'un des deux orifices ménagés dans l'élément de transmission de couple et dans le deuxième élément.

Selon un mode de réalisation, la tête de rivet et le lamage sont coniques.

Selon un mode de réalisation, le premier organe de fixation est une goupille.

Selon un mode de réalisation, la goupille est fendue.

Selon un mode de réalisation, le premier organe de fixation comporte au moins deux goupilles fendues montées l'une dans l'autre.

Selon un mode de réalisation, la goupille est retenue axialement à l'intérieur de l'un des orifices de l'élément de transmission de couple et du deuxième élément au moyen d'un épaulement ménagé dans ledit orifice.

Selon un mode de réalisation, la goupille est retenue axialement à l'intérieur de l'un des orifices de l'élément de transmission de couple et du deuxième élément au moyen d'un renflement formé par déformation de matière en bordure de dudit orifice.

Selon un mode de réalisation, le deuxième organe de fixation est un rivet.

Selon un mode de réalisation, le deuxième organe de fixation présente une dureté Rockwell inférieure à celle du premier organe de fixation. Ainsi, l'organe de fixation le plus dur, à savoir le premier, qui est plus onéreux et plus complexe à monter, est positionné de sorte à reprendre majoritairement les efforts alors que l'organe de fixation, moins dur, à savoir le second, qui est moins onéreux et plus simple à monter, reprend moins d'effort mais permet néanmoins d'assurer une retenue axiale de l'élément de transmission de couple sur le second élément.

Selon un mode de réalisation, le deuxième organe de fixation présente une dureté Rockwell comprise entre 60 et 90 HRB.

Selon un mode de réalisation, le premier organe de fixation présente une dureté Rockwell supérieure à 36 HRC, notamment supérieure à 45 HRC.

Selon un mode de réalisation, l'élément élastique d'amortissement comporte une lame flexible destinée à coopérer avec un élément d'appui équipant le premier élément ; la lame flexible étant fixée au deuxième élément par l'élément de transmission de couple.

Selon un mode de réalisation, l'élément de transmission de couple est formé d'un seul tenant avec la lame flexible. Au sens de la présente description, l'expression « formé d'un seul tenant » désigne plusieurs éléments qui tiennent d'une seule pièce, ladite pièce pouvant être faite d'un matériau homogène ou d'un matériau composite.

Selon un mode de réalisation, l'élément d'appui contre lequel la lame flexible s'appuie est apte à transmettre le couple entre la lame flexible et le premier élément, la lame flexible étant apte à fléchir pour transmettre un couple entre les premier et deuxième éléments et la flexion de la lame flexible étant accompagnée d'un déplacement circonférentiel entre la lame flexible et l'élément d'appui.

Selon un mode de réalisation, la lame flexible comporte une surface de came et l'élément d'appui comporte un suiveur de came agencé pour coopérer avec la surface de came.

Selon un mode de réalisation, le suiveur de came est un galet monté mobile en rotation sur ledit élément d'entrée ou de sortie par l'intermédiaire d'un palier à roulement.

Selon un mode de réalisation, l'élément d'appui est disposé radialement à l'extérieur de la lame flexible. Une telle disposition permet de retenir radialement la lame flexible lorsqu'elle est soumise à la force centrifuge. Toutefois, dans un autre mode de réalisation, l'élément d'appui est disposé radialement à l'intérieur de la lame flexible.

Selon un mode de réalisation, la lame flexible est agencée pour se déformer dans un plan perpendiculaire à l'axe de rotation.

Selon un mode de réalisation, la lame flexible et l'élément de transmission de couple se rejoignent dans une zone de jonction et le premier organe de fixation est placé plus proche de la zone de jonction que le deuxième organe de fixation.

Selon un mode de réalisation, l'élément de transmission de couple est fixé au deuxième élément par l'intermédiaire d'un troisième organe de fixation qui est monté au travers d'un orifice de l'élément de transmission de couple et d'un orifice du deuxième élément ; le troisième organe de fixation étant plus éloigné de la zone de jonction que le premier organe de fixation.

Selon un mode de réalisation, le troisième organe de fixation est un rivet.

Selon un mode de réalisation, le troisième organe de fixation présente une dureté Rockwell inférieure à celle du premier organe de fixation. Selon un mode de réalisation, le troisième organe de fixation présente une dureté Rockwell comprise entre 60 et 90 HRB.

Selon un mode de réalisation, l'élément élastique d'amortissement comporte un ressort hélicoïdal disposé selon une orientation sensiblement circonférentielle et l'élément de transmission de couple comporte une patte d'appui ; ledit ressort hélicoïdal étant disposé de telle sorte que, lors d'une transmission de couple entre le premier élément et le deuxième élément, il soit en appui à une première extrémité contre la patte d'appui et à une autre extrémité contre un siège d'appui porté par le premier élément.

Selon un mode de réalisation, l'élément de transmission de couple est fixé au deuxième élément par l'intermédiaire d'un troisième organe de fixation monté dans un orifice respectif de l'élément de transmission de couple, le troisième organe de fixation étant monté en force dans l'orifice respectif dudit l'élément de transmission de couple et présentant une dureté Rockwell supérieure à 30 HRC.

Selon un mode de réalisation, le premier et le troisième organe de fixation sont disposés circonférentiellement de part et d'autre du deuxième organe de fixation.

Selon un mode de réalisation, l'élément de transmission s'étend circonférentiellement sur un secteur angulaire limité, notamment compris entre 20 et 90 degrés.

Selon un mode de réalisation, l'élément de transmission s'étend circonférentiellement sur un secteur angulaire limité, notamment compris entre 30 et 90°, par exemple de l'ordre de 45°.

Par exemple, l'élément de transmission s'étend circonférentiellement sur un secteur angulaire compris entre 30 et 80 degrés, par exemple compris entre 30 et 70 degrés.

Notamment, l'élément de transmission de couple est fixé au deuxième élément par un groupe d'organes de fixation comportant le premier organe de fixation et le deuxième organe de fixation et le premier organe de fixation est positionné de façon à reprendre des efforts supérieurs à ceux repris respectivement par le deuxième organe de fixation.

Selon un mode de réalisation, le premier organe de fixation est positionné de façon à reprendre des efforts supérieurs à ceux repris respectivement par le deuxième organe de fixation et le/les autre(s) organe(s) de fixation du groupe d'organes de fixation de l'élément de transmission.

Selon un autre mode de réalisation, le deuxième organe de fixation est positionné de façon à reprendre des efforts inférieurs à ceux repris respectivement par le premier organe de fixation et le/les autre(s) organe(s) de fixation du groupe d'organes de fixation de l'élément de transmission.

Le groupe d'organes de fixation s'étend sur un secteur angulaire limité, notamment compris entre 20 et 90 degrés, par exemple compris entre 30 et 90 degrés, notamment entre 30 et 80 degrés, par exemple compris entre 30 et 70 degrés.

Le fait que les organes de fixation d'un même élément de transmission de couple s'étendent sur un secteur angulaire limité contribue à déséquilibrer la répartition des efforts entre les différents organes de fixation d'un même élément de transmission de couple. Il est ainsi particulièrement nécessaire dans ce cas de figure que le premier organe de fixation présente une dureté Rockwell supérieure à 30 HRC.

Selon un mode de réalisation, le dispositif d'amortissement comporte une pluralité d'éléments de transmission de couple, notamment un autre élément de transmission de couple fixé au deuxième élément ; et au moins un autre élément élastique d'amortissement apte à accoupler le premier élément à l'autre élément de transmission de couple de manière à permettre une transmission de couple avec amortissement des vibrations entre le premier élément et le deuxième élément ; l'autre élément de transmission de couple étant fixé au deuxième élément par l'intermédiaire d'au moins un autre premier et un autre deuxième organe de fixation qui sont chacun montés dans un orifice respectif ménagé dans l'autre élément de transmission de couple ; l'autre premier organe de fixation et l'autre deuxième organe de fixation étant positionnés de telle sorte que l'autre premier organe de fixation reprenne des efforts supérieurs à ceux repris par l'autre deuxième organe de fixation lors d'une transmission de couple du premier élément vers le deuxième élément ; l'autre premier organe de fixation étant monté par un ajustement serré, c'est-à-dire sans jeu, dans l'orifice respectif de l'autre élément de transmission de couple et présentant une dureté Rockwell supérieure à 30 HRC.

Selon certains modes de réalisation, les caractéristiques relatives à l'élément de transmission de couple et à ses organes de fixation énoncées précédemment s'appliquent à l'autre élément de transmission de couple et à ses autres organes de fixation.

Selon un mode de réalisation, le nombre total d'organes de fixation servant à fixer la pluralité d'éléments de transmission de couple est inférieur à 10, en notamment inférieur à 9, en particulier inférieur à 8, par exemple inférieur à 6. Ainsi, le couple à transmettre dans la chaine de transmission, passe par un nombre d'organes de fixation limité, et selon le contexte, de façon déséquilibrée. Il est donc nécessaire qu'au moins la dureté du premier organe de fixation soit supérieure à 30 HRC

Selon un mode de réalisation, le dispositif d'amortissement comporte exactement deux éléments de transmisison de couple.

Selon un mode de réalisation, ces deux éléments de transmission de couple sont agencés de façon symétrique par rapport à l'axe de rotation.

Avantageusement, le dispositif d'amortissement est destiné à transmettre le couple moteur provenant du moteur et allant jusqu'à la boite de vitesse.

Avantageusement, le couple moteur est destiné à passer par les organes de fixation des éléments de transmission de couple au deuxième élément lorsqu'un couple moteur est transmis par le dispositif d'amortissement. Selon un mode de réalisation, l'invention fournit également un véhicule automobile comportant un dispositif d'amortissement précité.

### Brève description des figures

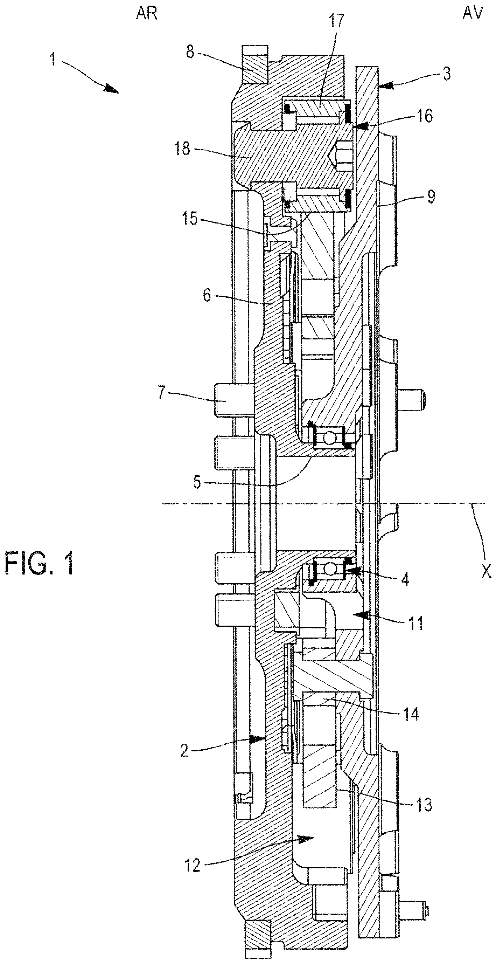

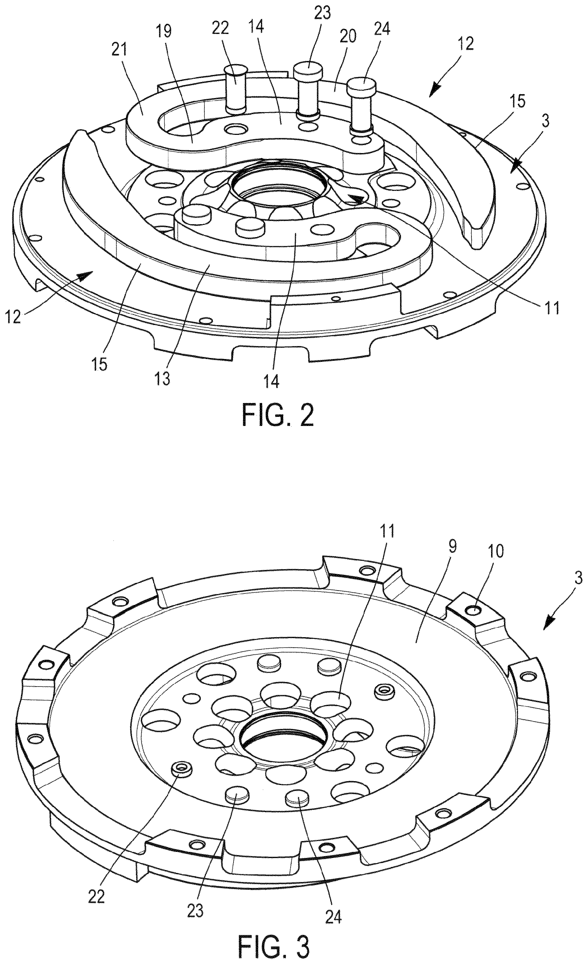

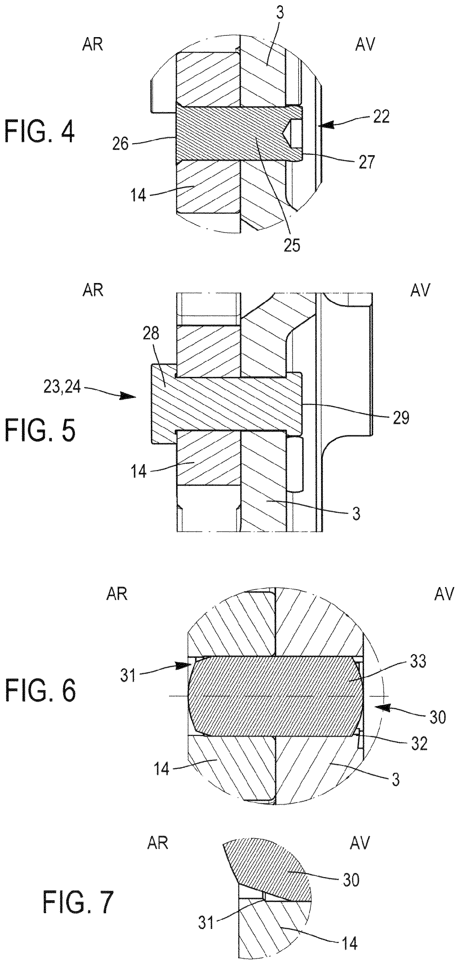

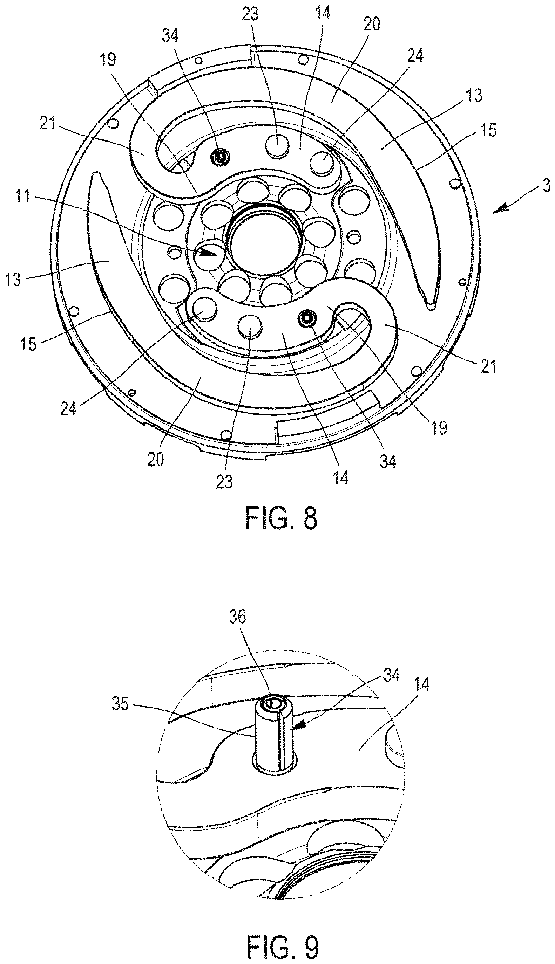

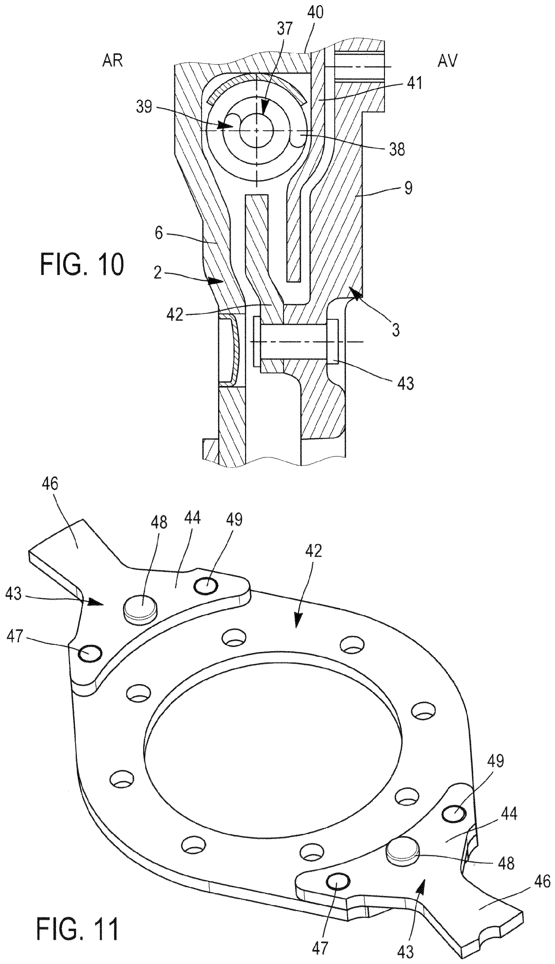

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue en coupe axiale d'un double volant amortisseur selon un premier mode de réalisation.
- **La** **figure 2** est une vue arrière en perspective du volant secondaire et des éléments élastiques d'amortissement du double volant amortisseur de la figure 1.
- **La** **figure 3** est une vue avant en perspective du volant secondaire du double volant amortisseur de la figure 1.
- **La** **figure 4** est une vue agrandie d'un premier organe de fixation assurant la fixation au volant secondaire d'un élément de transmission de couple lié à un élément élastique d'amortissement.
- **La** **figure 5** est une vue détaillée en coupe du volant secondaire des figures 2 et 3 dans un plan radial passant par un deuxième organe de fixation assurant la fixation au volant secondaire d'un élément de transmission de couple lié à un élément élastique d'amortissement.
- **La** **figure 6** est une vue détaillée illustrant un premier organe de fixation selon un deuxième mode de réalisation.
- **La** **figure 7** est une vue agrandie du premier organe de fixation de la figure 6.
- **La** **figure 8** est une vue arrière en perspective du volant secondaire et des éléments élastiques d'amortissement selon un troisième mode de réalisation.
- **La** **figure 9** est une vue de détail de la figure 8 illustrant le premier organe de fixation assurant la fixation au volant secondaire d'un élément de transmission de couple lié à un élément élastique d'amortissement.
- **La** **figure 10** est une vue partielle en coupe axiale d'un double volant amortisseur selon un quatrième mode de réalisation.
- **La** **figure 11** est une vue détaillée du voile du double volant amortisseur de la figure 10.

### Description détaillée de modes de réalisation

Dans la description et les revendications, on utilisera, les termes "externe" et "interne" ainsi que les orientations "axiale" et "radiale" pour désigner, selon les définitions données dans la description, des éléments du dispositif d'amortissement des vibrations. Par convention, l'orientation "radiale" est dirigée orthogonalement à l'axe X de rotation du dispositif d'amortissement déterminant l'orientation "axiale" et, de l'intérieur vers l'extérieur en s'éloignant dudit axe, l'orientation "circonférentielle" est dirigée orthogonalement à l'axe du dispositif d'amortissement et orthogonalement à la direction radiale. Les termes "externe" et "interne" sont utilisés pour définir la position relative d'un élément par rapport à un autre, par référence à l'axe X de rotation du dispositif d'amortissement, un élément proche de l'axe est ainsi qualifié d'interne par opposition à un élément externe situé radialement en périphérie. Par ailleurs, les termes "arrière" AR et "avant" AV sont utilisés pour définir la position relative d'un élément par rapport à un autre selon la direction axiale, un élément destiné à être placé proche du moteur thermique étant désigné par arrière et un élément destiné à être placé proche de la boîte de vitesses étant désigné par avant.

Le dispositif d'amortissement des vibrations est destiné à être disposé dans la chaîne de transmission d'un véhicule automobile, entre le moteur et la boîte de vitesses. Le dispositif d'amortissement peut notamment être un double volant amortisseur, tel qu'illustré sur les figures annexées, être intégré à un disque d'embrayage ou à un embrayage de pontage d'un dispositif d'accouplement hydraulique.

Le dispositif de transmission est typiquement destiné à équiper des chaînes de transmission dont le moteur est apte à délivrer un couple maximum compris entre 100 et 300 Nm et plus particulièrement entre 200 et 280 Nm.

Sur la figure 1, l'on observe un double volant amortisseur 1 comprenant un volant d'inertie primaire 2, destiné à être fixé au bout d'un vilebrequin d'un moteur à combustion interne, non représenté, et un volant d'inertie secondaire 3 qui est centré et guidé sur le volant primaire 2 au moyen d'un palier 4, tel qu'un palier à roulement à billes. Les volants primaire 2 et secondaire 3 sont destinés à être montés mobiles autour d'un axe de rotation X et sont, en outre, mobiles en rotation l'un par rapport à l'autre autour dudit axe X.

Le volant primaire 2 comporte un moyeu 5 radialement interne supportant le palier 4 et une portion annulaire 6 s'étendant radialement vers l'extérieur depuis le moyeu 5. Le volant primaire 2 est pourvu d'orifices, permettant le passage de vis de fixation 7, destinées à la fixation du volant primaire 2 sur le vilebrequin du moteur. Le volant primaire 2 porte, sur sa périphérie extérieure, une couronne d'entraînement 8, dentée, pour l'entraînement en rotation du volant primaire 2, à l'aide d'un démarreur.

Le volant secondaire 3 est destiné à former le plateau de réaction pour un dispositif embrayage, non représenté, relié à l'arbre d'entrée d'une boîte de vitesses. Pour ce faire, le volant secondaire 3 comporte une surface annulaire de frottement 9, annulaire et plane, tournée vers l'avant et destinée à coopérer avec les garnitures de friction d'un disque d'embrayage, non représenté, lorsque le dispositif d'embrayage est à l'état embrayé. Le disque d'embrayage est solidaire en rotation d'un arbre d'entrée de la boîte de vitesses. Ainsi, le couple est transmis entre le vilebrequin du moteur et l'arbre d'entrée de la boîte de vitesses lorsque le dispositif d'embrayage est à l'état embrayé.

Le volant secondaire 3 comporte, à proximité de son bord externe, des plots et/ou des orifices 10, représentées sur la figure 3, servant au montage du couvercle de l'embrayage. Le volant secondaire 3 comporte en outre des orifices 11, disposés en vis-à-vis des orifices 7 formés dans le volant primaire 2. Ces orifices 11 sont destinés à permettre le passage des vis de fixation 7, lors du montage du double volant amortisseur 1 sur le vilebrequin.

Les volants primaire 2 et secondaire 3 sont couplés en rotation par des éléments élastiques d'amortissement 12, représentés de manière détaillée sur la figure 2. Les éléments élastiques d'amortissement 12 permettent de transmettre un couple et d'amortir les acyclismes de rotation entre le volant primaire 2 et le volant secondaire 3.

Chaque élément élastique d'amortissement 12 comporte une lame flexible 13 qui est liée à un élément de transmission de couple 14. L'élément de transmission de couple 14 est fixé sur le volant secondaire 3 et assure ainsi une transmission du couple entre la lame flexible 13 et le volant secondaire 3. L'élément de transmission de couple 14 et la lame flexible 13 sont ici formées d'un seul tenant. L'élément de transmission de couple 14 constitue donc dans le mode de réalisation représentée, une portion de fixation assurant la fixation de la lame flexible 13 sur le volant secondaire 3.

Chaque lame flexible 13 est agencée pour se déformer dans un plan perpendiculaire à l'axe de rotation X et présente une surface de came 15 qui est agencée pour coopérer avec un élément d'appui formé par un suiveur de came 16, notamment représenté sur la figure 1, porté par le volant primaire 2. Les suiveurs de came 16 comportent ici des galets 17 montés mobiles en rotation sur le volant primaire 2 autour d'un axe de rotation parallèle à l'axe de rotation X. Chaque suiveur de came 16 est maintenu en appui contre la surface de came 15 de l'une des lames flexibles 13 et est agencé pour rouler contre ladite surface de came 15 lors d'un mouvement relatif entre les volants primaire 2 et secondaire 3.

Chaque surface de came 15 est agencée de telle sorte que, pour une rotation relative entre le volant primaire 2 et le volant secondaire 3 dans un sens ou dans l'autre, depuis une position angulaire relative de repos, le suiveur de came 16 se déplace sur la surface de came 15 et, ce faisant, exerce un effort de flexion sur la lame flexible 13. Par réaction, la lame flexible 13 exerce sur le suiveur de came 16 une force de rappel ayant une composante circonférentielle qui tend à ramener les volants primaire 2 et secondaire 3 vers leur position angulaire relative de repos. Ainsi, les lames flexibles 13 sont aptes à transmettre un couple entraînant du volant primaire 2 vers le volant secondaire 3 (sens direct) et un couple résistant du volant secondaire 3 vers le volant primaire 2 (sens rétro). Par ailleurs, les vibrations de torsion et les irrégularités de couple qui sont produites par le moteur et transmises par l'arbre de vilebrequin au volant primaire 2 sont amorties par la flexion des lames flexibles 13.

Comme représenté sur la figure 2, chaque lame flexible 13 comporte un brin interne 19 prolongeant l'élément de transmission de couple 14, un brin externe 20 et un coude 21 reliant le brin interne 19 au brin externe 20. Le brin externe 20 se développe autour de l'axe X avec une composante circonférentielle depuis le coude 21 jusqu'à l'extrémité libre de la lame flexible 13. Les brins, interne 19 et externe 20, et le coude 21 sont chacun aptes à se déformer lors d'un mouvement relatif entre le volant primaire 2 et le volant secondaire 3 à partir de la position de repos. Chacune des portions de la lame flexible 13 absorbe ainsi une partie des contraintes subies par la lame flexible 13 lors du mouvement relatif précité. Le coude forme un angle de l'ordre de 180° de sorte qu'une portion du brin interne 19 se situe radialement entre une portion du brin externe 20 et l'axe X. En d'autres termes, la lame flexible 13 comporte deux tronçons flexibles radialement décalées l'un de l'autre et séparés par un espace radial. Une telle forme de lame flexible 13 lui permet de se développer sur une longueur conséquente ce qui permet d'offrir une surface de came 15 présentant une longueur circonférentielle importante. Ainsi, la raideur angulaire des éléments élastiques d'amortissement 12 peut être limitée ce qui conduit à une augmentation significative des performances de filtration.

De façon à réduire les frottements parasitaires susceptibles d'affecter la fonction d'amortissement, les galets sont avantageusement montés en rotation sur le volant primaire 2 par l'intermédiaire d'organes de roulement, tels que des billes, des rouleaux ou des aiguilles. Comme représenté sur la figure 1, les galets 17 sont chacun portés par une tige cylindrique 18 s'étendant selon un axe parallèle à l'axe de rotation X. Chaque tige cylindrique 18 comporte une extrémité qui est fixée à l'intérieur d'un alésage ménagé dans le volant primaire 2, par exemple par rivetage.

Comme représenté sur la figure 2, le double volant amortisseur 1 comporte deux éléments élastiques d'amortissement 12. Dans un tel cas, les deux éléments élastiques d'amortissement 12 ainsi que leur élément de transmission de couple 14 respectif sont symétriques les uns aux autres par rapport à l'axe X de manière à assurer l'équilibre du double volant amortisseur 1. Dans d'autres modes de réalisation, le double volant amortisseur 1 peut comporter un nombre supérieur d'éléments élastiques d'amortissement 12.

Si dans les modes de réalisation représentés, chaque lame flexible 13 est formée d'une pièce formée d'un seul tenant, dans un autre mode de réalisation, les lames flexibles 13 peuvent chacune comporter une portion rigide portant la surface de came 15 et une liaison élastique, par exemple en caoutchouc, reliant la portion rigide à l'élément de transmission de couple 14.

L'élément de transmission de couple 14 se développe circonférentiellement autour de l'axe X et est fixé au volant secondaire 3 par une pluralité d'organes de fixation 22, 23, 24 réparties autour de l'axe X. Plus particulièrement, l'élément de transmission de couple 14 s'étend sur un secteur angulaire compris entre 30 et 90°, par exemple de l'ordre de 45°. Dans le mode de réalisation représenté, l'élément de transmission de couple 14 est fixé au volant secondaire 3 par l'intermédiaire de trois organes de fixation 22, 23, 24. Chaque organe de fixation 22, 23, 24 est monté au travers de deux orifices respectivement ménagés dans l'élément de transmission de couple 14 et dans le volant secondaire 3.

Le premier organe de fixation 22, c'est-à-dire celui qui est situé au plus proche de la zone de jonction entre lame flexible 13 et l'élément de transmission de couple 14, est susceptible de supporter les efforts les plus importants, tandis que le deuxième et le troisième organes de fixation 23, 24 sont susceptibles de supporter des efforts moindres. Il a en effet été observé que, dans un agencement tel que décrit ci-dessus, le premier organe de fixation 23 était susceptible de reprendre 80 % à 90 % des charges radiales exercées sur les organes de fixation 22, 23, 24 en fonctionnement.

Le premier organe de fixation 22, représenté de manière détaillée sur la figure 4, présente une dureté Rockwell qui est supérieure à 30 HRC et qui est avantageusement supérieure à 36 HRC. Le premier organe de fixation 22 est monté par un ajustement serré, c'est-à-dire sans jeu, à l'intérieur des deux orifices respectifs de l'élément de transmission de couple 14 et du volant secondaire 3. Le premier organe de fixation 22 est un rivet épanoui, en acier. En d'autres termes, le premier organe de fixation 22 comporte une tige pleine 25 présentant une première extrémité équipée d'une tête de rivet 26 et une seconde extrémité 27 bouterrollée qui est percée suivant l'axe de la tige pleine 25. Le perçage de la seconde extrémité 27 préalablement à son bouterrolage facilite la mise en oeuvre d'un procédé de rivetage lorsque l'organe de fixation 22 à déformer présente une dureté conséquente. Un tel rivet épanoui présente par exemple une dureté Rockwell comprise entre 36 et 50 HRC, par exemple de l'ordre de 45 HRC.

La tête de rivet 26 est logée dans un lamage ménagé dans l'orifice respectif de l'élément de transmission de couple 14. Dans le mode de réalisation représenté, la tête de rivet 26 et le lamage dédié présentent des formes coniques complémentaires.

Le deuxième et le troisième organes de fixation 23, 24 présentent une structure analogue, telle que représentée sur la figure 5. Le deuxième et le troisième organes de fixation 23, 24 sont des rivets présentant une dureté Rockwell bien inférieure à celle du premier organe de fixation, c'est-à-dire typiquement comprise entre 60 et 90 HRB, par exemple de l'ordre de 70 HRB. Ces rivets présentent une structure classique et présentent chacun une première extrémité munie d'une tête de rivet 28 et une deuxième extrémité 29 aplatie et élargie par bouterrollage. De tels rivets sont moins onéreux et plus simples à monter qu'un rivet épanoui présentant une dureté conséquente, tel que décrit ci-dessus. Les deuxième et le troisième organes de fixation 23, 24 ont principalement pour fonction d'assurer la retenue axiale de l'élément de transmission de couple 14 contre le volant secondaire 3 puisque la fonction de reprendre les efforts radiaux s'exerçant sur l'élément de transmission de couple 17 est principalement réalisée par le premier organe de fixation 22.

Selon un deuxième mode de réalisation, le premier organe de fixation 22 décrit ci-dessus en relation avec les figures 3 à 4 est remplacé par un organe de fixation 30, tel qu'illustré sur les figures 6 et 7. Le premier organe de fixation 30 est ici une goupille cylindrique en acier qui est montée en force dans les deux orifices respectivement ménagés dans le volant secondaire 3 et dans l'élément de transmission de couple 14. D'une part, l'un des orifices, celui ménagé dans l'élément de transmission de couple 14 dans le mode de réalisation représenté sur les figures 5 et 6, présente, à proximité de son extrémité opposée à l'autre orifice, un épaulement 31 permettant de retenir la goupille cylindrique 33 vers l'arrière. D'autre part, un renflement 32 est formé par déformation de matière en bordure de l'extrémité avant de l'orifice ménagé dans le volant secondaire 3, postérieurement à la mise en place de la goupille cylindrique 33 dans les deux orifices et permet ainsi de retenir la goupille cylindrique 33 vers l'avant. Pour réaliser un tel renflement 32, une pression est exercée localement en bordure de l'orifice ménagé dans le volant secondaire 3 au moyen d'une presse et d'un poinçon de manière à déformer localement la bordure de l'orifice. Afin de permettre une telle déformation de matière, le volant secondaire 3 est par exemple réalisé en fonte, notamment dans une fonte vermiculaire car une telle fonte présente une très bonne résistance à la déformation et n'a pas tendance à s'émailler lorsqu'elle est déformée. La goupille cylindrique 33 est susceptible de présenter une dureté Rockwell supérieure à 36 HRC, par exemple de l'ordre de 60 HRC.

Le troisième mode de réalisation, représenté sur les figures 8 et 9, diffère des autres modes de réalisation décrits ci-dessus par la structure du premier organe de fixation 34. Le premier organe de fixation comporte ici au moins une goupille fendue, et plus particulièrement deux goupilles fendues 35, 36 montées l'une dans l'autre dans la variante de réalisation représentée. Les deux goupilles fendues 35, 36 présentent également une dureté Rockwell élevée, c'est-à-dire supérieure à 30 HRC.

La fente des goupilles 35, 36 permet de leur conférer une élasticité de manière à permettre un montage serré à l'intérieur des deux orifices sans pour autant que l'effort de montage des goupilles fendus 35, 36 soit important. La goupille externe 35 présente donc à l'état libre un périmètre supérieur à celui des orifices du volant primaire 2 et de l'élément de transmission de couple 14. Ainsi, la goupille externe 35 est comprimée et montée serrée, c'est-à-dire sans jeu, à l'intérieur des orifices. De même, la goupille interne 36 est également comprimée et montée serrée à l'intérieur de la goupille externe 35 lorsque la goupille externe est placée à l'intérieur des orifices.

Selon un mode de réalisation, les goupilles fendues 35, 36 sont en outre maintenues dans l'orifice du volant secondaire 3 et dans l'orifice de l'élément de transmission de couple 14 au moyen au moyen d'une part, d'un épaulement ménagé dans l'un des orifices et, d'autre part, d'un renflement formé par déformation de matière en bordure de l'autre orifice, tel que décrit ci-dessus en relation avec les figures 6 et 7.

Si dans les modes de réalisation décrits ci-dessus, les éléments élastiques d'amortissement 12 sont solidaires du volant secondaire 3 via les éléments de transmission de couple 14 tandis que les suiveurs de came 16 sont solidaires du volant primaire 2, dans d'autres modes de réalisation non représentés, la structure est inversée de telle sorte que les éléments élastiques d'amortissement 37 sont solidaires du volant primaire 2 via les éléments de transmission de couple 14 tandis que les suiveurs de came 16 sont solidaires du volant secondaire 3.

Les figures 10 et 11 illustrent un quatrième mode de réalisation. Dans ce mode de réalisation, les éléments élastiques d'amortissement 37 comportent des ressorts hélicoïdaux 38. Les ressorts hélicoïdaux 38 sont plus particulièrement des ressorts courbes circonférentiellement réparties autour de l'axe X et logés dans une chambre annulaire 39 ménagée dans le volant primaire 2.

Le volant primaire 2 comporte en outre une jupe cylindrique 40 s'étendent axialement vers l'avant depuis la périphérie de la portion annulaire 6 et un couvercle 41, fixé sur la jupe cylindrique 40. Le couvercle 41 définit avec la portion annulaire 6 et la jupe cylindrique 40 la chambre annulaire de logement 39 des ressorts hélicoïdaux 38. Par ailleurs, le volant secondaire 3 est fixé par une pluralité de rivets à un voile annulaire 42 qui est disposé axialement entre la portion annulaire 6 et le couvercle 41 du volant primaire 2.

Deux éléments de transmission du couple 43, illustrés sur la figure 11, sont fixés sur le voile annulaire 45. Les éléments de transmission de couple 43 comportent chacun une portion de fixation 44 qui assure la fixation dudit élément de transmission de couple 43 au voile annulaire 42 et une patte d'appui 46 qui s'étend radialement vers l'extérieur. Chacun des ressorts hélicoïdaux 38, deux dans le mode de réalisation représenté, s'étend entre deux pattes d'appui 46 et deux sièges d'appui, non représentés, portés par le volant primaire 2. Chaque siège d'appui est par exemple constitué par un bossage formé dans la portion annulaire 6 et par un bossage formé dans le couvercle 41.

Ainsi, en fonctionnement, chacun des ressorts hélicoïdaux 38 prend appui, à une première extrémité, contre un siège d'appui porté par le volant primaire 2 et, à une seconde extrémité, contre une patte d'appui 46, de sorte à assurer la transmission du couple entre le volant primaire 2 et le volant secondaire 3.

La portion de fixation 44 de chaque élément de transmission de couple 43 se développe circonférentiellement et est fixé sur le voile annulaire 45 par trois organes de fixation 47, 48, 49 qui sont réparties circonférentiellement. La portion de fixation 44 de l'élément de transmission de couple 43 s'étend sur un secteur angulaire compris entre 30 et 90°, par exemple de l'ordre de 45°.

Chacun des trois organes de fixation 47, 48, 49 passe au travers d'un orifice ménagé dans la portion de fixation 44 de l'élément de transmission de couple 43 et d'un orifice ménagé dans le voile annulaire 42. Le premier et le troisième organes de fixation 47, 49 sont placés circonférentiellement de part et d'autre d'un deuxième organe de fixation 48, central.

Dans ce mode de réalisation, ce sont le premier et le troisième organes de fixation 47, 49 qui sont susceptibles de supporter les efforts les plus importants. Aussi, le premier et le troisième organes de fixation 47, 49 présentent une dureté Rockwell supérieure à 30 HRC, de préférence comprise entre 36 et 70 HRC.

Sur la figure 11, le premier et le troisième organe de fixation 47, 49 sont des goupilles cylindriques présentant une structure similaire à celle décrite en relation avec les figures 6 et 7. Chaque goupille cylindrique est montée avec un ajustement serré dans les orifices du voile annulaire 42 et de la portion de fixation 44 de l'élément de transmission de couple 42. En outre, l'un des orifices présente un épaulement permettant de retenir la goupille cylindrique dans un premier sens tandis que la bordure périphérique de l'autre orifice présente localement un renflement permettant de retenir la goupille selon un deuxième sens opposé au premier sens.

Le deuxième organe de fixation 48 présente quant à lui des caractéristiques identiques à ceux décrits en relation avec la figure 5. En particulier, le deuxième organe de fixation 48 est un rivet de structure classique et présente une dureté Rockwell inférieure à celle du premier et du deuxième organes de fixation 47, 49 puisque sa fonction principale consiste à assurer la retenue axiale de l'élément de transmission de couple 43 contre le voile annulaire 42.

Selon d'autres variantes de réalisation, le premier et le troisième organes de fixation 47, 49 sont des rivets épanouis tels que décrits en relation avec la figure 4 ou comportent chacun une ou plusieurs goupilles fendues, telles que décrites en relation avec les figures 8 et 9.

Dans une autre variante de réalisation non représentée, la fixation de chaque élément de transmission de couple 43 sur le voile annulaire 45 diffère du mode de réalisation décrit et illustré en relation avec la figure 11 en ce que le rivet 48 de structure classique est supprimé. Dans un tel cas, le premier et le second organes de fixation sont formés par des rivets épanouis qui sont implantés au niveau des organes de fixation référencés 47 et 49 sur la figure 11.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Dispositif d'amortissement pour une chaîne de transmission de véhicule automobile comportant :
- un premier élément (2) et un deuxième élément (3, 42) mobiles en rotation l'un par rapport à l'autre autour d'un axe de rotation X ;
- au moins un élément de transmission de couple (14, 43) fixé au deuxième élément (3, 42); et
- au moins un élément élastique d'amortissement (12, 37) apte à accoupler le premier élément (2) à l'élément de transmission de couple (14, 43) de manière à permettre une transmission de couple avec amortissement des vibrations entre le premier élément (2) et le deuxième élément (3, 42);
- l'élément de transmission de couple (14, 43) étant fixé au deuxième élément (3, 42) par l'intermédiaire d'au moins un premier et un deuxième organes de fixation (22, 30, 34, 47 ; 23, 48) qui sont chacun montés dans un orifice respectif ménagé dans l'élément de transmission de couple (14, 43); **caractérisé en ce que** le premier organe de fixation (22, 30, 34, 47) et le deuxième organe de fixation (23, 48) sont positionnés de telle sorte que le premier organe de fixation (22, 30, 34, 47) reprenne des efforts supérieurs à ceux repris par le deuxième organe de fixation lors d'une transmission de couple du premier élément vers le deuxième élément ; le premier organe de fixation (22, 30, 34, 47) étant monté par un ajustement serré dans l'orifice respectif de l'élément de transmission de couple (14, 43) et présentant une dureté Rockwell supérieure à 30 HRC.

2. Dispositif d'amortissement selon la revendication 1, dans lequel le premier et le deuxième organes de fixation (22, 30, 34, 47 ; 23, 48) traversent chacun un orifice respectif ménagé dans le deuxième élément (3, 42) et le premier organe de fixation (22, 30, 34, 47) est monté par un ajustement serré dans l'orifice respectif du deuxième élément (3, 42).

3. Dispositif d'amortissement selon la revendication 2, dans lequel le premier organe de fixation (22) est un rivet épanoui comportant une tige pleine (25) présentant une première extrémité équipée d'une tête de rivet (26)

4. Dispositif d'amortissement selon la revendication 3, dans lequel a tige pleine du rivet épanoui présente une seconde extrémité (27) bouterollée qui est percée suivant l'axe de la tige pleine (25).

5. Dispositif d'amortissement selon la revendication 3 ou 4, dans lequel la tête de rivet (26) est reçue dans un lamage formé à l'extrémité de l'un des deux orifices ménagés dans l'élément de transmission de couple (14) et dans le deuxième élément (3).

6. Dispositif d'amortissement selon la revendication 1 ou 2, dans lequel le premier organe de fixation (30, 34, 47) est une goupille (30, 35, 36) ou une goupille fendue (35, 36).

7. Dispositif d'amortissement selon la revendication 6, dans lequel le premier organe de fixation (34, 47) comporte au moins deux goupilles (35, 36) fendues montées l'une dans l'autre.

8. Dispositif d'amortissement selon l'une quelconque des revendications 6 à 7, dans lequel la goupille (30, 35, 36) est retenue axialement à l'intérieur des orifices respectifs de l'élément de transmission de couple (14, 43) et du deuxième élément (3, 42) au moyen, d'une part, d'un épaulement (31) ménagé dans l'un des orifices et, d'autre part, d'un renflement (32) formé par déformation de matière en bordure de l'autre des orifices.

9. Dispositif d'amortissement selon l'une quelconque des revendications 1 à 8, dans lequel l'élément élastique d'amortissement (12) comporte une lame flexible (13) destinée à coopérer avec un élément d'appui (16) équipant le premier élément (2) ; la lame flexible (13) étant fixée au deuxième élément (3) par l'élément de transmission de couple (14).

10. Dispositif d'amortissement selon la revendication 9, dans lequel l'élément de transmission de couple (14) est formé d'un seul tenant avec la lame flexible (13).

11. Dispositif d'amortissement selon la revendication 9 ou 10, dans lequel l'élément d'appui (16) contre lequel la lame flexible (13) s'appuie est apte à transmettre le couple entre la lame flexible (13) et le premier élément (1), la lame flexible (13) étant apte à fléchir pour transmettre un couple entre les premier et deuxième éléments (2, 3, 42) et la flexion de la lame flexible (13) étant accompagnée d'un déplacement circonférentiel entre la lame flexible (13) et l'élément d'appui (16).

12. Dispositif d'amortissement selon l'une quelconque des revendications 9 à 11, dans lequel la lame flexible (13) et l'élément de transmission de couple (14) se rejoignent dans une zone de jonction et dans lequel le premier organe de fixation (22, 30, 34) est placé plus proche de la zone de jonction que le deuxième organe de fixation (23).

13. Dispositif d'amortissement selon l'une quelconque des revendications 1 à 8, dans lequel l'élément élastique d'amortissement (37) comporte un ressort hélicoïdal (38) disposé selon une orientation sensiblement circonférentielle et dans lequel l'élément de transmission de couple (43) comporte une patte d'appui (46) ; ledit ressort hélicoïdal (38) étant disposé de telle sorte que, lors d'une transmission de couple entre le premier élément (2) et le deuxième élément (42), il soit en appui à une première extrémité contre la patte d'appui (46) et à une autre extrémité contre un siège d'appui porté par le premier élément (2).

14. Dispositif d'amortissement selon la revendication 13, dans lequel l'élément de transmission de couple (43) est fixé au deuxième élément par l'intermédiaire d'un troisième organe de fixation monté dans un orifice respectif de l'élément de transmission de couple (43), le troisième organe de fixation (49) étant monté en force dans l'orifice respectif dudit l'élément de transmission de couple (43) et présentant une dureté Rockwell supérieure à 30 HRC.

15. Dispositif d'amortissement selon la revendication 14 dans lequel le premier et le troisième organes de fixation (47, 49) sont disposés circonférentiellement de part et d'autre du deuxième organe de fixation (50).

## Patentansprüche

1. Dämpfungsvorrichtung für einen Antriebsstrang eines Kraftfahrzeugs, umfassend:
- ein erstes Element (2) und ein zweites Element (3, 42), die relativ zueinander um eine Drehachse X drehbeweglich sind;
- mindestens ein Drehmomentübertragungselement (14, 43), das am zweiten Element (3, 42) fixiert ist; und
- mindestens ein elastisches Dämpfungselement (12, 37), das geeignet ist, das erste Element (2) an das Drehmomentübertragungselement (14, 43) derart zu koppeln, dass eine Drehmomentübertragung mit Dämpfung der Schwingungen zwischen dem ersten Element (2) und dem zweiten Element (3, 42) ermöglicht wird;
- wobei das Drehmomentübertragungselement (14, 43) am zweiten Element (3, 42) über mindestens ein erstes und ein zweites Fixierungsorgan (22, 30, 34, 47; 23, 48) fixiert ist, die jeweils in einer jeweiligen im Drehmomentübertragungselement (14, 43) ausgebildeten Öffnung montiert sind; **dadurch gekennzeichnet, dass** das erste Fixierungsorgan (22, 30, 34, 47) und das zweite Fixierungsorgan (23, 48) so positioniert sind, dass das erste Fixierungsorgan (22, 30, 34, 47) bei einer Drehmomentübertragung vom ersten Element zum zweiten Element Kräfte aufnimmt, die größer sind als die, die vom zweiten Fixierungsorgan aufgenommen werden; wobei das erste Fixierungsorgan (22, 30, 34, 47) mit einer Presspassung in der jeweiligen Öffnung des Drehmomentübertragungselements (14, 43) montiert ist und eine Rockwell-Härte von mehr als 30 HRC aufweist.

2. Dämpfungsvorrichtung nach Anspruch 1, bei der das erste und das zweite Fixierungsorgan (22, 30, 34, 47; 23, 48) jeweils eine jeweilige Öffnung durchdringen, die im zweiten Element (3, 42) ausgebildet ist, und das erste Fixierungsorgan (22, 30, 34, 47) mit einer Presspassung in der jeweiligen Öffnung des zweiten Elements (3, 42) montiert ist.

3. Dämpfungsvorrichtung nach Anspruch 2, bei der das erste Fixierungsorgan (22) ein Blindniet mit einem massiven Schaft (25) ist, der ein erstes mit einem Nietkopf versehenes Ende (26) aufweist.

4. Dämpfungsvorrichtung nach Anspruch 3, bei welcher der massive Schaft des Blindniets ein zweites geschelltes Ende (27) aufweist, das entlang der Achse des massiven Schafts (25) angebohrt ist.

5. Dämpfungsvorrichtung nach Anspruch 3 oder 4, bei welcher der Nietkopf (26) in einer Senkung aufgenommen ist, die am Ende der einen der beiden Öffnungen gebildet ist, die im Drehmomentübertragungselement (14) und im zweiten Element (3) ausgebildet sind.

6. Dämpfungsvorrichtung nach Anspruch 1 oder 2, bei der das erste Fixierungsorgan (30, 34, 47) ein Stift (30, 35, 36) oder ein Spannstift (35, 36) ist.

7. Dämpfungsvorrichtung nach Anspruch 6, bei der das erste Fixierungsorgan (34, 47) mindestens zwei ineinander montierte Spannstifte (35, 36) umfasst.

8. Dämpfungsvorrichtung nach einem der Ansprüche 6 bis 7, bei welcher der Stift (30, 35, 36) axial im Inneren der jeweiligen Öffnungen des Drehmomentübertragungselements (14, 43) und des zweiten Elements (3, 42) mittels zum einen einer Schulter (31), die in einer der Öffnungen ausgebildet ist, und zum anderen einer Verdickung (32), die durch Materialverformung am Rand der anderen der Öffnungen gebildet ist, gehalten wird.

9. Dämpfungsvorrichtung nach einem der Ansprüche 1 bis 8, bei der das elastische Dämpfungselement (12) eine flexible Lamelle (13) umfasst, die dazu bestimmt ist, mit einem Stützelement (16) zusammenzuwirken, mit dem das erste Element (2) ausgestattet ist; wobei die flexible Lamelle (13) an dem zweiten Element (3) durch das Drehmomentübertragungselement (14) fixiert ist.

10. Dämpfungsvorrichtung nach Anspruch 9, bei der das Drehmomentübertragungselement (14) einstückig mit der flexiblen Lamelle (13) gebildet ist.

11. Dämpfungsvorrichtung nach Anspruch 9 oder 10, bei der das Stützelement (16), an dem sich die flexible Lamelle (13) abstützt, geeignet ist, das Drehmoment zwischen der flexiblen Lamelle (13) und dem ersten Element (1) zu übertragen, wobei die flexible Lamelle (13) geeignet ist, nachzugeben, um ein Drehmoment zwischen dem ersten und dem zweiten Element (2, 3, 42) zu übertragen, und das Nachgeben der flexiblen Lamelle (13) mit einer umfänglichen Verlagerung zwischen der flexiblen Lamelle (13) und dem Stützelement (16) einhergeht.

12. Dämpfungsvorrichtung nach einem der Ansprüche 9 bis 11, bei der sich die flexible Lamelle (13) und das Drehmomentübertragungselement (14) in einer Fügezone fügen und bei der das erste Fixierungsorgan (22, 30, 34) näher an der Fügezone als das zweite Fixierungsorgan (23) platziert ist.

13. Dämpfungsvorrichtung nach einem der Ansprüche 1 bis 8, bei der das elastische Dämpfungselement (37) eine Schraubenfeder (38) umfasst, die entlang einer im Wesentlichen umfänglichen Ausrichtung angeordnet ist, und bei der das Drehmomentübertragungselement (43) einen Stützlappen (46) umfasst; wobei die Schraubenfeder (38) so angeordnet ist, dass sie bei einer Drehmomentübertragung zwischen dem ersten Element (2) und dem zweiten Element (42) an einem ersten Ende an dem Stützlappen (46) und an einem anderen Ende an einem vom ersten Element (2) getragenen Stützsitz abgestützt ist.

14. Dämpfungsvorrichtung nach Anspruch 13, bei der das Drehmomentübertragungselement (43) am zweiten Element über ein drittes Fixierungsorgan fixiert ist, das in einer jeweiligen Öffnung des Drehmomentübertragungselements (43) montiert ist, wobei das dritte Fixierungsorgan (49) in die jeweilige Öffnung des Drehmomentübertragungselements (43) eingepresst ist und eine Rockwell-Härte von mehr als 30 HRC aufweist.

15. Dämpfungsvorrichtung nach Anspruch 14, bei der das erste und das dritte Fixierungsorgan (47, 49) umfänglich beidseits des zweiten Fixierungsorgans (50) angeordnet sind.

## Claims

1. Damping device for a motor vehicle drive train having:
- a first element (2) and a second element (3, 42) which can move rotationally with respect to each other about an axis of rotation X;
- at least one torque-transmitting element (14, 43) fixed to the second element (3, 42); and
- at least one elastic damping element (12, 37) capable of coupling the first element (2) to the torque-transmitting element (14, 43) so as to enable torque transmission with damping of the vibrations between the first element (2) and the second element (3, 42);
- the torque-transmitting element (14, 43) being fixed to the second element (3, 42) by means of at least a first and a second fixing member (22, 30, 34, 47; 23, 48) which are each mounted in a respective orifice formed in the torque-transmitting element (14, 43); wherein the first fixing member (22, 30, 34, 47) and the second fixing member (23, 48) being positioned such that the first fixing member (22, 30, 34, 47) absorbs forces which are greater than to those absorbed by the second fixing member when torque is transmitted from the first element to the second element; the first fixing member (22, 30, 34, 47) being fit tightly in the respective orifice of the torque-transmitting element (14, 43) and having a Rockwell hardness greater than HRC 30.

2. Damping device according to Claim 1, in which the first and the second fixing members (22, 30, 34, 47; 23, 48) each through a respective orifice formed in the second element (3, 42) and the first fixing member (22, 30, 34, 47) is fit tightly in the respective orifice of the second element 3, 42).

3. Damping device according to Claim 2, in which the first fixing member (22) is a countersunk-head rivet having a solid shaft (25) having a first end equipped with a rivet head (26).

4. Damping device according to Claim 3, in which the solid shaft of the countersunk-head rivet has a second upset end (27) which is pierced along the axis of the solid shaft (25).

5. Damping device according to Claim 3 or 4, in which the rivet head (26) is accommodated in a counterbore formed at the end of one of the two orifices formed in the torque-transmitting element (14) and in the second element (3).

6. Damping device according to Claim 1 or 2, in which the first fixing member (30, 34, 47) is a pin (30, 35, 36) or a split pin (35, 36).

7. Damping device according to Claim 6, in which the first fixing member (34, 47) has at least two split pins (35, 36) mounted one inside the other.

8. Damping device according to either of Claims 6 and 7, in which the pin (30, 35, 36) is held axially inside the respective orifices of the torque-transmitting element (14, 43) and of the second element (3, 42) by means, on the one hand, of a shoulder (31) formed in the one of the orifices and, on the other hand, of a bulge (32) formed by deforming the material at the edge of the other orifice.

9. Damping device according to any of Claims 1 to 8, in which the elastic damping element (12) has a flexible leaf (13) intended to interact with a bearing element (16) equipping the first element (2); the flexible leaf (13) being fixed to the second element (3) by the torque-transmitting element (14).

10. Damping device according to Claim 9, in which the torque-transmitting element (14) is formed integrally with the flexible leaf (13).

11. Damping device according to Claim 9 or 10, in which the bearing element (16) against which the flexible leaf (13) bears is capable of transmitting the torque between the flexible leaf (13) and the first element (1), the flexible leaf (13) being capable of flexing so as to transmit torque between the first and the second elements (2, 3, 42) and the flexing of the flexible leaf (13) being accompanied by a circumferential displacement between the flexible leaf (13) and the bearing element (16) .

12. Damping device according to any of Claims 9 to 11, in which the flexible leaf (13) and the torque-transmitting element (14) meet in a joining zone and in which the first fixing member (22, 30, 34) is placed closer to the joining zone than the second fixing member (23) .

13. Damping device according to any of Claims 1 to 8, in which the elastic damping element (37) has a helical spring (38) arranged in a substantially circumferential orientation and in which the torque-transmitting element (43) has a bearing tab (46); the said helical spring (38) being arranged such that, when torque is transmitted between the first element (2) and the second element (42), it bears at a first end against the bearing tab (46) and at another end against a bearing seat carried by the first element (2).

14. Damping device according to Claim 13, in which the torque-transmitting element (43) is fixed to the second element by means of a third fixing member fitted in a respective orifice of the torque-transmitting element (43), the third fixing member (49) being force-fitted in the respective orifice of the said torque-transmitting element (43) and having a Rockwell hardness greater than HRC 30.

15. Damping device according to Claim 14, in which the first and the third fixing members (47, 49) are arranged circumferentially on either side of the second fixing member (50).
